# EUROPEAN PATENT APPLICATION

(11) **EP 1 921 876 A1**
(43) Date of publication of application: **14.05.2008**
(21) Application number: 06796919.6
(22) Date of filing: 29.08.2006
(51) Int. Cl.: H04Q 7/34, H04M 3/00

(54) **COMMUNICATION PROVIDER SELECTING METHOD AND MOBILE COMMUNICATION TERMINAL APPARATUS**

(30) Priority: 01.09.2005 JP 2005253315
(71) Applicant: SII Mobile Communications Inc., Chiba-shi, Chiba 261-8507 (JP); Vodafone K.K., Tokyo 105-7317 (JP)
(72) Inventor: KOYAMA, Kazuhiro, Chiba-shi, Chiba 261-8507 (JP); NOGUCHI, Masahiro, Chiba-shi, Chiba 261-8507 (JP); KANAYA, Haruo, Chiba-shi, Chiba 261-8507 (JP); HARUNA, Takaaki, Tokyo 105-7317 (JP); KUDO, Masao, Tokyo 105-7317 (JP)
(74) Representative: Sneary, Adrian Bernard
(86) International application number: PCT/JP2006/316939
(87) International publication number: WO 2007/029560

(57) **Abstract**

In a mobile communication terminal device 1: a storage means 23 has first through fifth registration regions; a business with which communication can be established extraction means 21a analyzes information carried by a radio wave which is received at the current position and extracts communication businesses with which communication can be established; and a communication business selection means 21b selects a communication business to be employed based upon the results of extraction by the business with which communication can be established extraction means 21 a and upon the contents registered in the first through the fifth registration regions. As a result, during roaming, this mobile communication terminal device is enabled to select, among a plurality of communication businesses with which communication can be established, a communication business for which the cost of connection is cheap.

## Description

### FIELD OF THE INVENTION

The present invention relates to a communication business selection method and to a mobile communication terminal device, and, in more detail, relates to a communication business selection method according to which a mobile communication terminal device selects a communication business to be employed, which is a communication business for utilization during communication, and to a mobile communication terminal device which utilizes this communication business selection method.

### BACKGROUND ART

3GPP (3rd Generation Partnership Project) is known as a standard for W-CDMA (Wideband Code Division Multiple Access) mobile communication systems and the like. In 3GPP, many details are prescribed for selection of a communication business and for roaming and so on. And in the TS 23.122 standard (Non-Access-Stratum functions related to Mobile Station (MS) in idle mode) related to layer 3 messages of a mobile terminal during the idle state, selection steps are prescribed for, after a mobile terminal is started, selecting a mobile business for network connection.

In these prescriptions, the communication business is specified by a so called PLMN (Public Land Mobile Network) network identifier. The mobile terminal commences communication with a PLMN which has been acquired upon startup (this is termed the HPLMN [Home PLMN]), and continues communication with this PLMN as long as roaming is not being performed. On the other hand, when the mobile terminal is performing roaming and shifts to the area of some other communication business, it acquires the PLMN of this area to which it has shifted (this is termed the VPLMN [Visited PLMN]), and stores this VPLMN as the PLMN (the RPLMN [Registered PLMN]) which has been registered until directly before roaming. And when, by roaming and acquiring these RPLMNs, the mobile terminal becomes able to select between a plurality of communication businesses, a communication common carrier, it is capable of selecting between these communication businesses according to two types of selection procedure: a so called automatic selection mode, and a so called manual selection mode.

This automatic selection mode is a selection procedure in which the mobile terminal uses a list in which j communication businesses are registered (j is a natural number) with a selection priority level (a selection priority order) being assigned to them, and, when the mobile terminal is started up or when it is not possible to receive the base station, that one is selected, among the communication businesses which are registered in this list which can be used and moreover to which connection is permitted, which has the highest selection priority level. Furthermore, the PLMNs function as business codes which identify the communication businesses (i.e. as communication business codes). As will be described hereinafter, the mobile terminal stores j types of business code) which are intrinsic to the various communication businesses, demodulates the wireless signal from the base station, sequentially and repeatedly compares together the business codes which are included in this wireless signal and the business codes which are stored, and selects that communication business which has the highest selection priority level. It should be understood that, when selecting a business with which communication can be established in this manner, generally, the mobile terminal performs this by scanning the bandwidth included in the entire frequency channel for each prescribed sampling frequency, and thus acquiring business notified information.

On the other hand, in the procedure according to the manual selection mode, the mobile terminal displays to the user which communication businesses can be employed, and the mobile terminal receives service using a VPLMN, only when the user selects that communication business manually. It should be understood that, if manual selection has failed, this is defined as being priority mode, and the mobile terminal selects in the automatic selection mode.

Next, in the standard TS 23.122 described above, prescriptions are provided both for roaming which is being performed internationally (International Roaming) and also for roaming which is being performed in-country (National Roaming: normal roaming). A location where international roaming is being performed is a location in which the mobile terminal receives service by a PLMN of a second country which is different from the first country of the HPLMN which it already possesses. On the other hand, a location where in-country roaming is being performed is a location in which the mobile terminal receives service by a PLMN of a country which is the same as the first country of the HPLMN which it already possesses, and thus the mobile terminal can receive service, at whatever location within the first country it may be, or at whichever of certain specified locations it may be. Moreover, when the mobile terminal is performing in-country roaming, the mobile terminal repeatedly and cyclically searches for its HPLMN during this in-country roaming. Thus for example, in Europe, the unit area for roaming may be a country, while in the USA it may be a state; and units one stage smaller may also be set as roaming units in other areas than these. Thus, in this specification, the technical term "roaming" is used as a term which includes both international roaming and in-country roaming.

It should be understood that, when the manual selection mode is being used, each time the user shifts to a second country which is the destination of shifting, he needs to perform actuation for selecting a communication business. On the other hand, when the automatic selection mode is being used, the user does not necessarily need to perform actuation each time he shifts.

Next, the automatic selection mode described above will be explained in more detail.A confirmation procedure for performing the confirmation of actuation for selection of a communication business may be, for example, performed by using a special type of dedicated device for managing connection testing and connection management for roaming. This dedicated device may be, for example, connected to a user interface which is provided to the mobile terminal in advance, and then it becomes capable of monitoring the internal state of the mobile terminal.

In the mobile terminal, there is provided a compact IC (Integrated Circuit) card upon which business codes are recorded; and, moreover, business codes which have been received from various base stations are stored in a RAM (Random Access Memory) and are held in this RAM as a received base station history information table.

The mobile terminal finds various frequency channels f₁ ~ fⱼ of the j communication businesses, constructs a received base station history information table, acquires information related to the base stations surrounding the mobile terminal, and selects a base station. In concrete terms, the mobile terminal compares the business codes which it has acquired with the RPLMN of the communication business directly before, and, if one of them is in agreement therewith, confirms the selection of this base station for which agreement has been found, and communicates with this desired communication business via the base station.

However, if no agreement is found by this comparison of the communication business RPLMN, then, as a second round of comparison, the mobile terminal compares the business codes which it has acquired with the communication business HPLMN, and reaches an agreement decision. And, if no agreement is found, then the mobile terminal performs a third round of comparison by comparing together the business codes and business codes which have been designated by the user as roaming targets, and selects a base station if agreement is found. But, if no agreement is found, then the mobile terminal performs a fourth round of comparison by comparing together the business codes and the business codes of the designated roaming target businesses, and selects a base station if agreement is found. But, if no agreement is found, then the mobile terminal selects any one of the business codes, among the business codes which have been acquired, according to the method stipulated in the standard TS23.122, connects to this desired communication business via this base station which has been selected, and establishes communication with the desired opposite party.

By doing this, the mobile terminal completes connection processing by comparing together the j business codes and the received business codes.

Furthermore, a terminal device has been proposed (for example, refer to Patent Document #1) which rapidly distinguishes between the home business with which a normal contract is in force, and a roaming target business. This terminal device is one which includes: a position information acquisition unit which acquires position information specifying the present position; a candidate information storage unit which stores candidate information specifying a plurality of candidate base station devices; a candidate selection unit which selects a plurality of candidate base station devices, based upon this position information which has been acquired; a base station specification unit which specifies a base station device which is actually to be communicated with, from among this plurality of candidate base station devices which have been selected; and a communication unit which performs communication with the base station device which has thus been specified.

Patent Document #1: Japanese Laid-Open Patent Publication 2004-357214.

### DISCLOSURE OF THE INVENTION

### PROBLEMS TO BE SOLVED BY THE INVENTION

Now, when using the automatic selection mode described above, it is not possible to eliminate the possibility that the mobile terminal will be connected to a communication business, contrary to the intentions of the user or of the communication business. Due to this, checking of the communication business to which connection has been established must be performed.

However, it is utterly impossible in practice for the user to issue confirmation each time a mobile terminal, which uses such a dedicated device as described above for roaming testing, connects to a communication business which has been connected. In particular, when the mobile terminal is of a data communication card type and is connected to an external personal computer or the like and does not possess a user interface, this mobile terminal is not able to perform connection management with communication businesses according to the cost of connection, even though such a dedicated device described above is used. And, although a method has also been contemplated in which, by using a dial up tool which has been developed specifically for dial up connection, the mobile terminal confirms the communication business to which connection has been established upon the screen, in this case as well, some convenience is lost.

Moreover, in Patent Document #1, no technique is disclosed for updating or changing, for example, the data related to position stored in the mobile communication terminal device. Accordingly this is not a prior art which allows for selection between a plurality of base station device candidates using data for which the possibility of being updated or changed is high, such as communication business data during roaming or the like.

The present invention has been made in consideration of the circumstances described above, and it takes as its objective to provide a user mobile communication terminal method and a mobile communication terminal device which, during roaming, can select that communication business, among a plurality of communication businesses with which communication can be established, for which, for example, the cost of connection is the lowest in price, or the like.

### MEANS FOR SOLVING THE PROBLEMS

When considered from a first aspect thereof, the present invention is a communication business selection method in which a communication business to be employed, which is a communication business to be used by a mobile communication terminal device during communication, is selected, comprising: a business with which communication can be established extraction process, in which the mobile communication terminal device analyzes information carried by a radio wave which is received at the current position, and extracts communication businesses with which communication can be established; a first selection process, in which the mobile communication terminal device decides whether or not the most recently utilized communication business, for which an identifier is registered in a first registration region of the mobile communication terminal device, is included in the extracted communication businesses, which are the communication businesses which have been extracted by the communication business extraction process, and if an affirmative decision result has been obtained, the mobile communication terminal device selects the most recently utilized communication business as the communication business to be employed; a second selection process in which, if the result of the decision in the first selection process is negative, the mobile communication terminal device decides whether or not a contracted communication business, for which an identifier is registered in a second registration region of the mobile communication terminal device, is included in the extracted communication businesses, and if an affirmative decision result has been obtained, the mobile communication terminal device selects the contracted communication business as the communication business to be employed; a third selection process in which, if the result of the decision in the second selection process is negative, the mobile communication terminal device decides whether or not at least a single user registered communication business, for which an identifier is registered in a third registration region in which only the user can perform registration, is included in the extracted communication businesses, and if an affirmative decision result has been obtained, the mobile communication terminal device selects the communication business to be employed from among communication businesses which are extracted communication businesses and moreover are user registered communication businesses; a fourth selection process in which, if the result of the decision in the third selection process is negative, the mobile communication terminal device decides whether or not at least a single contracted business registered communication business, for which an identifier is registered in a fourth registration region in which only the contracted communication business can perform registration, is included in the extracted communication businesses, and if an affirmative decision result has been obtained, the mobile communication terminal device selects the communication business to be employed from among communication businesses which are extracted communication businesses and moreover are contracted business registered businesses; a fifth selection process in which, if the result of the decision in the fourth selection process is negative, the mobile communication terminal device decides whether or not at least a single optionally registered communication business, for which an identifier is registered in a fifth registration region in which the user and the contracted business can perform registration, is included in the extracted communication businesses, and if an affirmative decision result has been obtained, the mobile communication terminal device selects the communication business to be employed from among communication businesses which are extracted communication businesses and moreover are optionally registered communication businesses; and a communication business non-existent decision process in which, if the result of the decision in the fifth selection process is negative, it is decided that no communication business to be employed exists at the current position.

Here "decision result" means that, for example, the mobile communication terminal device performs a decision as to whether the extracted communication business codes which have been extracted by the mobile communication terminal device itself from the wireless signal which it has received, and the most recently utilized communication business code which is stored and registered in the first registration region of the mobile communication terminal device, agree with one another or do not agree. And "if an affirmative decision result has been obtained" means the case in which, for example, this decision result is agreement, while "if a negative decision result has been obtained" means the case in which, for example, this decision result is disagreement.

In this communication business selection method, first, in the communication business extraction process, the mobile communication terminal device analyzes information carried by a radio wave which is received at the current position, and extracts communication businesses with which communication can be established. Next, in the first selection process, the mobile communication terminal device decides whether or not the most recently utilized communication business, for which an identifier is registered in a first registration region of the mobile communication terminal device, is included in the extracted communication businesses, which are the communication businesses which have been extracted by the communication business extraction process. And, if the result of this decision is affirmative, then the mobile communication terminal device selects the most recently utilized communication business as the communication business to be employed

If the result of the decision in the first selection process is negative, then, in the second selection process, the mobile communication terminal device decides whether or not a contracted communication business, for which an identifier is registered in a second registration region of the mobile communication terminal device, is included in the extracted communication businesses. And, if the result of this decision is affirmative, then the mobile communication terminal device selects the contracted communication business as the communication business to be employed.

If the result of the decision in the second selection process is negative, then, in the third selection process, the mobile communication terminal device decides whether or not at least a single user registered communication business, for which an identifier is registered in a third registration region in which only the user can perform registration, is included in the extracted communication businesses. And if the result of this decision is affirmative, then the mobile communication terminal device selects the communication business to be employed from among communication businesses which are extracted communication businesses and moreover are user registered communication businesses.

If the result of the decision in the third selection process is negative, then, in the fourth selection process, the mobile communication terminal device decides whether or not at least a single contracted business registered communication business, for which an identifier is registered in a fourth registration region in which only the contracted communication business can perform registration, is included in the extracted communication businesses. And if the result of this decision is affirmative, then the mobile communication terminal device selects the communication business to be employed from among communication businesses which are extracted communication businesses and moreover are contracted business registered businesses.

If the result of the decision in the fourth selection process is negative, then, in the fifth selection process, the mobile communication terminal device decides whether or not at least a single optionally registered communication business, for which an identifier is registered in a fifth registration region in which the user and the contracted business can perform registration, is included in the extracted communication businesses. And if the result of this decision is affirmative, then the mobile communication terminal device selects the communication business to be employed from among communication businesses which are extracted communication businesses and moreover are optionally registered communication businesses.

And, if the result of the decision in the fifth selection process is negative, then the mobile communication terminal device decides that no communication business to be employed exists at the current position.

Thus, according to the communication business selection method of the present invention, since, in the base station selection processing, the processing for connection to the network is changed only from the list of specified business codes which is registered in the mobile communication terminal main body in advance, accordingly it is possible to select, for example, a desired communication business to which the cost of connection is cheap.

With the communication business selection method of the present invention, there may be further included an optionally registered communication business registration process of, before the business with which communication can be established extraction process, registering the identifier of at least a single optionally registered communication business in the fifth registration region. Here, "optionally registered communication business" is one or more communication businesses which are stored in a storage means which is provided to the mobile communication terminal device. In this case, before the process of extracting the businesses with which communication can be established, the mobile communication terminal device registers at least one of the identifier of a single optionally registered communication business in the fifth registration region. Due to this registration, it is possible for the user to select any desired communication business, for example a communication business to which the cost of connection is cheap, or the like.

Moreover, with the communication business selection method of the present invention, a selection priority level for each of the optionally registered communication businesses may also be registered in the fifth registration region; and, in the fifth selection process, the communication business to be employed may be selected in consideration of the selection priority levels. Since, in this case, in the fifth selection process, the mobile communication terminal device selects the communication business to be employed in consideration of the selection priority levels, accordingly, as one example, it becomes possible to update the list data for communication businesses and the attribute information data for these communication businesses separately, so that it becomes possible to update any desired attribute information, such as the cost of connection or the like.

And, when considered from a second aspect thereof, the present invention is a mobile communication terminal device, characterized by comprising: a storage means which comprises a first registration region in which an identifier of a most recently utilized communication business is registered, a second registration region in which an identifier of a contracted communication business is registered, a third registration region in which at least an identifier of a single user registered communication business can be registered only by the user, a fourth registration region in which at least an identifier of a single contracted business registered communication business can be registered only by the contracted communication business, and a fifth registration region in which at least an identifier of a single optionally registered communication business can be registered by the user and by the contracted communication business; a business with which communication can be established extraction means which analyzes information carried by a radio wave which is received at the current position, and extracts communication businesses with which communication can be established; and a communication business selection means which, based upon the result of extraction by the business with which communication can be established extraction means and upon the contents registered in the first through fifth registration regions, selects a communication business to be employed, which is the communication business to be utilized during communication; and in that the communication business selection means: performs a first decision as to whether or not the most recently utilized communication business is included in the extracted communication businesses, which are the communication businesses which have been extracted by the business with which communication can be established extraction means, and, if an affirmative decision result has been obtained, selects the most recently utilized communication business as the communication business to be employed; if the result of the first decision has been negative, performs a second decision as to whether or not the contracted communication business is included in the extracted communication businesses, and, if an affirmative decision result has been obtained, selects the contracted communication business as the communication business to be employed; if the result of the second decision has been negative, performs a third decision as to whether or not the at least a single user registered communication business is included in the extracted communication businesses, and if an affirmative decision result has been obtained, selects the communication business to be employed from among communication businesses which are the extracted communication businesses and moreover are the user registered communication businesses; if the result of the third decision has been negative, performs a fourth decision as to whether or not the at least a single contracted business registered communication business is included in the extracted communication businesses, and if an affirmative decision result has been obtained, selects the communication business to be employed from among communication businesses which are extracted communication businesses and moreover are contracted business communication registered businesses; if the result of the fourth decision has been negative, performs a fifth decision as to whether or not the at least a single optionally registered communication business is included in the extracted communication businesses, and if an affirmative decision result has been obtained, selects the communication business to be employed from among communication businesses which are the extracted communication businesses and moreover are the optionally registered communication businesses; and, if the result of the fifth decision has been negative, decides that no communication business to be employed exists at the current position.

With this mobile communication terminal device, the communication business selection means performs a first decision as to whether or not the most recently utilized communication business is included in the extracted communication businesses, which are the communication businesses which have been extracted by the business with which communication can be established extraction means. And if the result of this first decision is affirmative, then the communication business selection means selects the most recently utilized communication business as the communication business to be employed.

If the result of this first decision is negative, then the communication business selection means performs a second decision as to whether or not the contracted communication business is included in the extracted communication businesses. And if the result of this second decision is affirmative, then the communication business selection means selects the contracted communication business as the communication business to be employed.

If the result of this second decision is negative, then the communication business selection means performs a third decision as to whether or not the at least a single user registered communication business is included in the extracted communication businesses. And if the result of this third decision is affirmative, then the communication business selection means selects the communication business to be employed from among communication businesses which are the extracted communication businesses and moreover are the user registered communication businesses.

If the result of this third decision is negative, then the communication business selection means performs a fourth decision as to whether or not the at least a single contracted business registered communication business is included in the extracted communication businesses. And if the result of this fourth decision is affirmative, then the communication business selection means selects the communication business to be employed from among communication businesses which are extracted communication businesses and moreover are contracted business communication registered businesses.

If the result of this fourth decision is negative, then the communication business selection means performs a fifth decision as to whether or not the at least a single optionally registered communication business is included in the extracted communication businesses. And if the result of this fifth decision is affirmative, then the communication business selection means selects the communication business to be employed from among communication businesses which are the extracted communication businesses and moreover are the optionally registered communication businesses.

And, if the result of this fifth decision is negative, then the communication business selection means decides that no communication business to be employed exists at the current position.

In other words, the mobile communication terminal device of the present invention uses the communication business selection method of the present invention described above, and selects a communication business to be employed, which is the communication business to be utilized during communication. Accordingly, it is possible to connect to the opposite party to communication via the desired communication business, and, as one example, it is possible to select, from among a plurality of communication businesses with which roaming contracts are set up, a communication business to which the cost of connection is cheap. Moreover, with regard to selection references for communication businesses, since it is possible to provide various such references, accordingly the convenience from the point of view of the user is high.

With the mobile communication terminal device of the present invention, a selection priority level for each of the optionally registered communication businesses may also be registered in the fifth registration region; and the communication business selection means may select the communication business to be employed from among communication businesses which are the extracted communication businesses and moreover are the optionally registered communication businesses, in consideration of the selection priority levels. In this case, the communication business selection means selects the communication business to be employed in consideration of the selection priority levels. Accordingly, as one example, this mobile communication terminal device may change the processing for connection to the network only from the list of specified business codes which is registered in the main body in advance, and accordingly, by setting to a specified business automatic selection mode in advance, it is possible to select, for example, a communication business to which the cost of connection is cheap.

### EFFECT OF THE INVENTION

According to the communication business selection method and the mobile communication terminal device of the present invention, during roaming, the mobile communication terminal device can select, from among the plurality of communication businesses with which communication can be established, for example, a communication business to which the cost of connection is cheap, or the like, so that the advantageous effect is obtained that it is possible to selectively connect to any desired communication business by actuation set by the user.

### BRIEF DESCRIPTION OF THE DRAWINGS

Fig. 1 is a schematic structural diagram of a mobile communication system according to an embodiment of the present invention;
Fig. 2A is an elevation view for explanation of the external appearance and structure of a mobile terminal of Fig. 1;
Fig. 2B is a rear view for explanation of the external appearance and structure of this mobile terminal of Fig. 1;
Fig. 3 is a functional block diagram of this mobile terminal of Fig. 1;
Fig. 4 is a figure for explanation of registration regions and registration data of a storage means according to an embodiment of the present invention;
Fig. 5 is a main flow chart for explanation of a communication business selection method by the mobile terminal shown in Figs. 2A, 2B, and 3;
Fig. 6A is a first figure showing an example of a result of acquisition of peripheral base station information;
Fig. 6B is a second figure showing an example of a result of acquisition of peripheral base station information;
Fig. 7 is a flow chart for explanation of base station selection processing A in Fig. 5; and
Fig. 8 is a flow chart for explanation of base station selection processing B in Fig. 5.

### BEST MODE FOR CARRYING OUT THE INVENTION

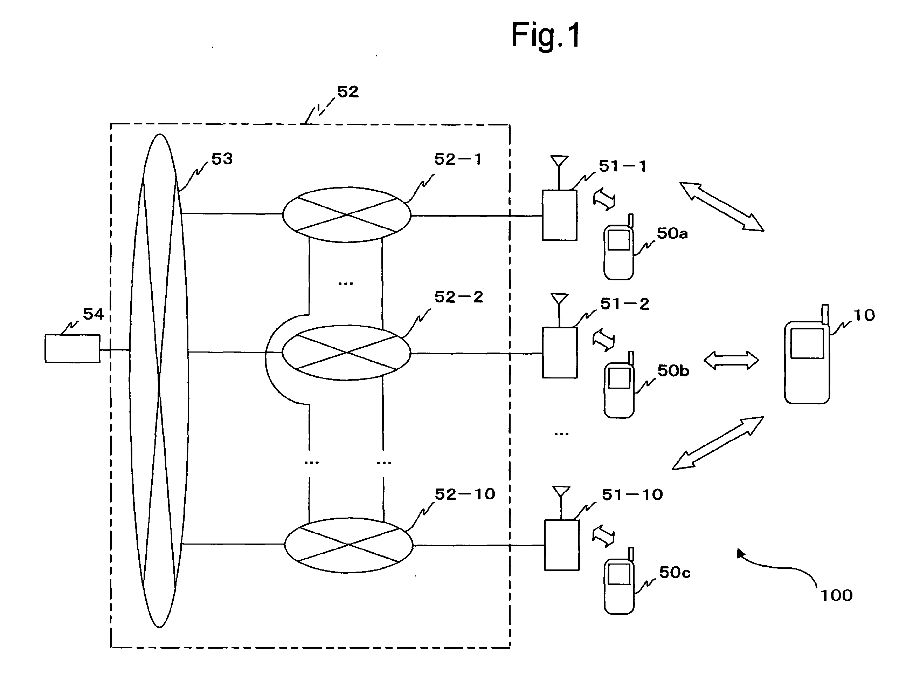

In the following, an embodiment of the present invention will be explained with reference to Figs. 1 through 8. In these figures, to elements which are the same or equivalent, the same reference symbols are appended, and duplication of explanation is omitted.

The schematic structure of a mobile communication system according to an embodiment of the present invention is shown in Fig. 1. As shown in this Fig. 1, this mobile communication system 100 is a wireless communication system which is roaming capable and which conforms, for example, to the 3GPP specification, and comprises a network 52, a fixed telephone device 54, n₁ base stations (n) is a natural number and here, by way of example, is supposed to be 10) 51-1, 51-2, .. 51-10, and mobile terminals 10, 50a, 50b, and 50c.

Here, the network 52 is a circuit network upon which roaming is possible, and includes, for example, n₂ wireless circuit networks (n₂ is a natural number and here, by way of example, is supposed to be 10) 52-1, 52-2, ... 52-10 and a fixed circuit network 53.

The wireless circuit network 52-1 has functions of control and exchange of the base station 51-1 and of position management of the mobile terminals 10, 50a, 50b, 50c and the like, and furthermore can be connected to the wireless circuit networks 52-2, ... 52-10 and so on so as to supply roaming connection service to the mobile terminals 10, 50a, 50b, 50c, and comprises a base station control device, a device for position registration, and the like, all omitted from the figure. A network identifier PLMN is allocated to this wireless circuit network 52-1, and the mobile terminal 10 identifies the wireless circuit network 52-1 with this PLMN, as will be described hereinafter.

The wireless circuit networks 52-2, ... 52-10 are structured in a similar manner to the wireless circuit network 52-1.

Each of the wireless circuit networks 52-1, ... 52-10 is managed or administered by one of ten communication businesses, and to each of them is assigned a PLMN, which are all different. As one example, each of the wireless circuit networks 52-1, ... 52-10 may be provided in a different country, and, each time the user of the mobile terminal 10 shifts between countries, due to roaming, the communication business to which the mobile terminal 10 is connected may be selectively changed over. It should be understood that it would also be acceptable for the communication businesses not to be different from one another, or for n₃ of the communication businesses to be the same (where n₃ is a natural number from 2 to 10).

Furthermore, the fixed circuit network 53 is a network for communication with, for example, a fixed telephone device 54 or the like which is provided in a home, an office, or the like. And this fixed circuit network 53 can be connected to any one of the wireless circuit networks 52-1 through 52-10, and can perform mutual communication therewith.

The base station 51-1 is a wireless sending and reception device which performs communication with the mobile terminal 10 and the mobile terminal 50a, and is managed or administered by, for example, a communication business A. Here, the mobile terminal 50a is one which has subscribed to a contract with this communication business A. Moreover, the base station 51-2 is a wireless sending and reception device which communicates with the mobile terminal 50b which has subscribed to a contract with a communication business B, and is managed or administered by, for example, this communication business B. In a similar manner, the base station 51-10 is a wireless sending and reception device which communicates with the mobile terminal 10, and with the mobile terminal 50c which has subscribed to a contract with a communication business J. It should be understood that the wireless circuit network 52-1 shown in Fig. 1 has a large number of base stations (omitted from the figure) other than the base station 51-1, and the mobile terminals 10 and 50a are also capable of communicating with any one of this large number of base stations.

The wireless circuit networks 52-2, ... 52-10 all have similar structure to the wireless circuit network 52-1, and each of them has a large number of base stations (omitted from the figure) which are capable of communication with the mobile terminals 10, 50b (the mobile terminals 10, 50c).

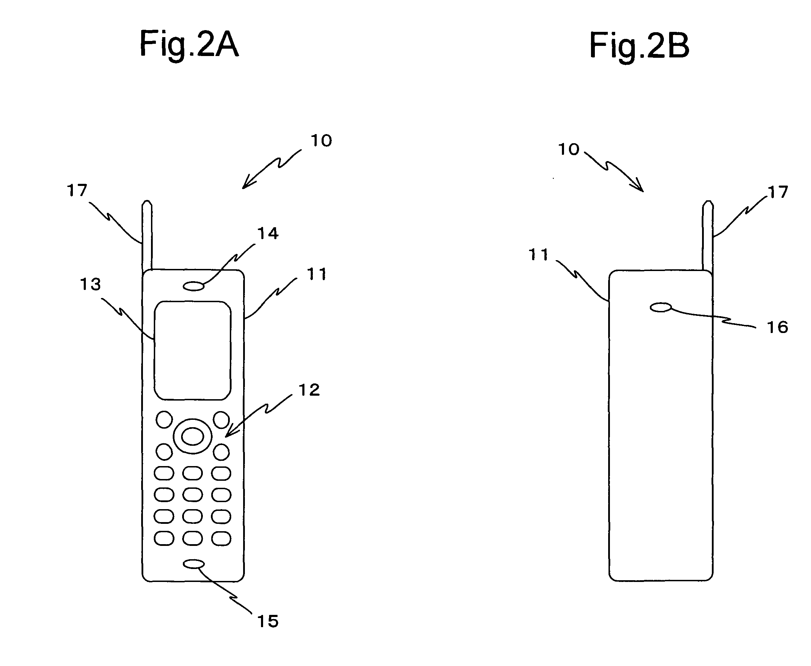

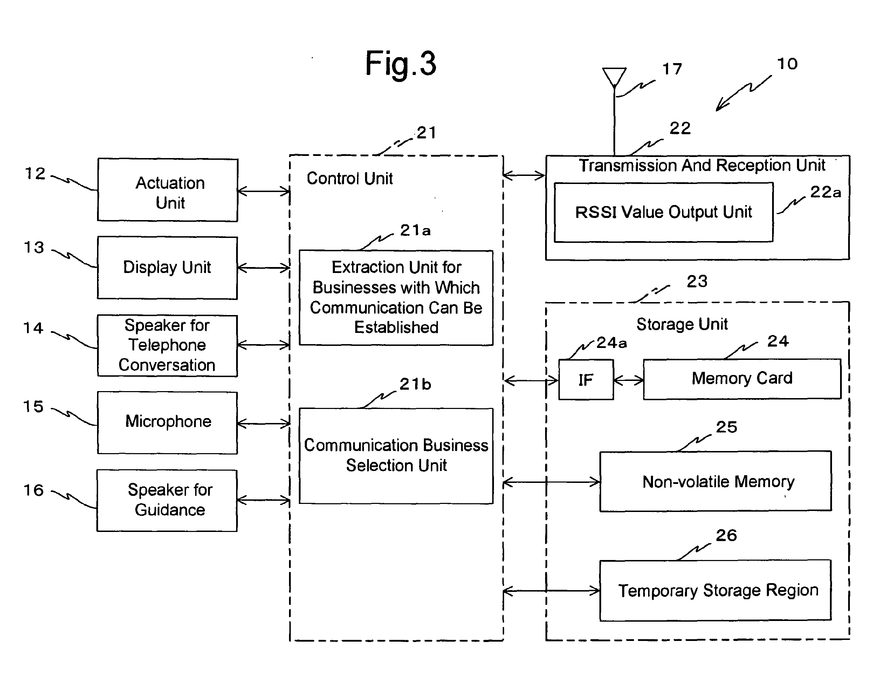

Next, the mobile terminal 10 which transmits and receives wireless signals to and from the base stations 51-1, ... 51-10 will be explained in detail with reference to Figs. 2a, 2B, and 3. Here, Fig. 2A is an elevation view showing the external appearance of this mobile terminal 10 according to an embodiment of the present invention, and Fig. 2B is a rear view for explanation of the external appearance of this mobile terminal 10 shown in Fig. 2A. Moreover, Fig. 3 is a hardware functional block diagram of this mobile terminal 10 according to an embodiment of the present invention.

As shown overall in these figures 2A, 2B, and 3, this mobile terminal 10 comprises: (a) a mobile terminal main body 11; (b) an actuation unit 12 having a tenkey pad for inputting telephone numbers and characters and so on to a control unit 21, and various function keys for inputting to the control unit 21 various types of command, such as for change over of operational state and of a business code using an automatic selection mode or a manual selection mode as will be described hereinafter and so on; and (c) a display unit (a display) 13 which displays actuation guidance, operational states, received messages and the like, according to commands from the control unit 21. Here, the mobile terminal main body 11 comprises: (i) a control unit 21 which controls the operation of the various sections of this mobile terminal 10; (ii) a transmission and reception unit 22 which transmits and receives wireless signals; and a storage unit 23 which stores business codes of communication businesses which can be selected, and identification data for the base stations 51-1, 51-2, ... 51-10 which has been received by the transmission and reception unit 22.

Furthermore, the mobile terminal 10 comprises: (d) a speaker for telephone conversation 14 which replays an audio signal which has been transmitted during a telephone conversation from the opposite party in communication, and a microphone 15 for inputting audio during a telephone conversation; and (e) a speaker for guidance for generating ring tones and guidance sounds, according to commands from the control unit 21.

Moreover, the mobile terminal 10 comprises: (f) an antenna 17 for wireless signals; and (g) a transmission and reception unit 22 for performing communication with the base stations 51-1 through 51-10. Here, in the transmission and reception unit 22, there is provided a RSSI value output unit 22a which measures the intensity of the received signal and outputs a RSSI (Received Signal Strength Indicator: a signal which displays the intensity of the received signal) value.

As shown in Fig. 3, the storage unit 23 comprises: (i) a memory card 24 which stores business codes of communication businesses to which are assigned selection priority levels which are higher than those of communication businesses which are optionally registered as will be described hereinafter, and the telephone number of the user; (ii) a memory interface (IF: interface) card 24a for inputting and outputting data to and from this memory card 24; (iii) a temporary storage region 26 which stores received base station history information data specifying a list of base stations which the mobile terminal 10 has received, and the like; and (iv) a non-volatile memory 25 which stores one or more business codes of optionally registered communication businesses as will be described hereinafter, and one or more items of selection priority level data which are assigned to these business codes of optionally registered communication businesses, in mutual correspondence.

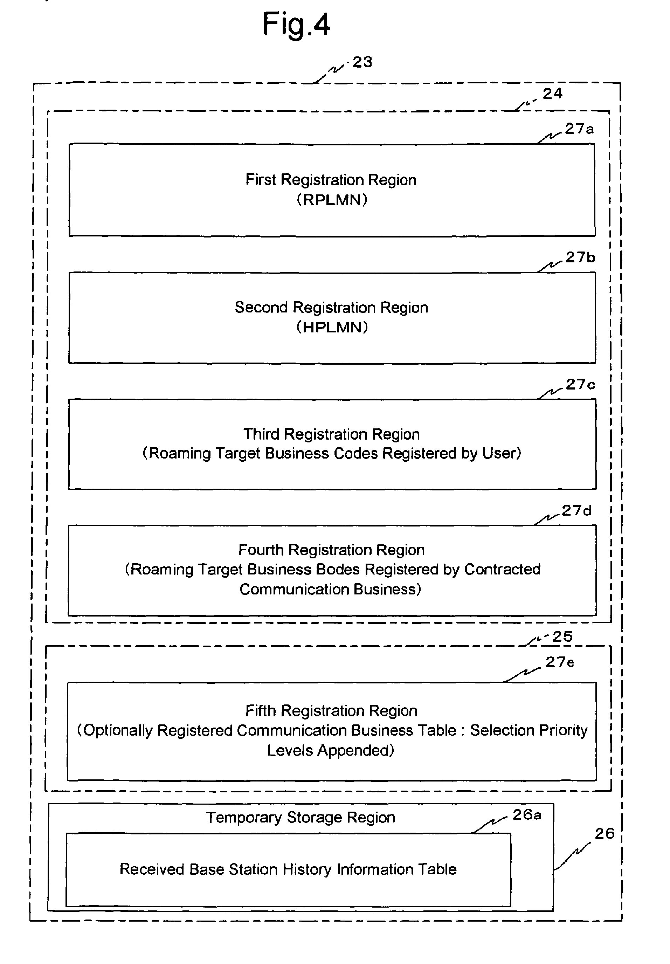

As shown in Fig. 4, in the memory card 24, there are provided: (i) a first registration region 27a in which is registered the business code RPLMN of the communication business which has most recently been utilized; (ii) a second registration region 27b in which is registered the business code HPLMN of the contracted communication business; (iii) a third registration region 27c (a registration region for "roaming target business codes which are registered by the user") in which one or more business codes of user registered communication businesses can only be registered by the user; and (iv) a fourth registration region 27d (a registration region for "roaming target business codes registered by the contracted communication business") in which one or more business codes of contracted business registered communication business can only be registered by the contracted communication business.

This memory card 24 is built as, for example, a USIM (Universal Subscriber Identity Module: a general purpose subscriber identification module) card. Such a USIM card is an IC card upon which are mounted an EEPROM (Electronically Erasable and Programmable Read Only Memory) having a storage region of low capacity, and/or a microcomputer chip or the like. By inserting this memory card 24 into the interface 24a and using the mobile terminal 10, the user is able to enter into a telephone conversation using the same telephone number as a telephone number which is registered for in-country.

The task of writing a business code into the memory card 24 can be performed either by the user himself (i.e. the owner, subscriber, user, and operator of the mobile terminal 10), or by the manufacturer of the mobile terminal 10, by the seller, or the like. In the following, this person who performs the task of writing, such as the user, the manufacturer, the seller or the like, will be termed the "operator".

The operator writes into the memory card 24 by using the interface 24a. At this time, for example, the operator downloads, from the home page of a communication business, a file (a data file) in which are included, converted into data form, both a business code and a writing execution file which uses a personal computer or the like. And, after the interface 24a and a personal computer have been connected together with a cable, the downloaded data file is executed. It should be understood that this writing in of a business code into the memory card 24 may also be performed by the manufacturer of the mobile terminal 10 or by the manufacturer of the memory card 24 or by an intermediate manufacturer or the like, by using a special type of writing in device during the manufacture of the mobile terminal 10 or the memory card 24 or the like.

Accordingly, the timing of writing of a business code into the memory card 24 may be as initial data during manufacture of the mobile terminal 10 or of the memory card 24 or the like if, for example, the operator uses a special type of writing in device is used, or may be any desired timing if a downloaded data file is used. Furthermore, the timing of this writing in may be when the user purchases the mobile terminal 10, or may be after the purchase of the mobile terminal 10: for example, this writing in may be performed when the user takes in the mobile terminal 10 to a marketing agency of a communication business or the like. It should be understood that the timing of writing in of a telephone number is after the determination of this telephone number, and in this case, after consideration of security, the operator performs this writing in a similar manner to the writing in of the business code.

Due to this it is possible for the user, by downloading a data file, to write in a business code or the like in desired timing, whether he is at home or in his workplace or at an external destination, and it is made possible for the user to select a communication business in a destination country to which he has shifted. Furthermore, the user is also able to receive finely detailed service with regard to updating of business codes. Due to this, the user may perform updating and addition of business codes, irrespective of the purchase timing of the mobile terminal 10.

A received base station history (a list of the base stations which have been received) created by the mobile terminal 10 is stored in the temporary storage unit 26 as a received base station history information table 26a, and it is arranged for this received base station history to be read and written by the control unit 21. The temporary storage unit 26 may, for example, consist of a RAM or the like.

And it is arranged for an optionally registered communication business table to be stored in the non-volatile memory 25. In this optionally registered communication business table, for optionally registered communication businesses, business codes and selection priority levels for these business codes are registered in mutual correspondence.

The non-volatile memory 25 may, for example, consist of an EEPROM. And it is arranged for it to be possible for the optionally registered communication business table to be written by the operator into this non-volatile memory 25, independently of the registered contents in the memory card 24.

When performing this writing in or updating of the business codes of these optionally registered communication businesses and of the various selection priority levels respectively corresponding to them, for example, before roaming, the operator may access the home page or the like of a communication business and download a data file for updating the selection priority level data of that communication business, and may transmit this data file which he has downloaded from his personal computer (not shown in the figures) to the mobile terminal 10 via an external cable (also not shown in the figures). And, by executing this data file upon the mobile terminal 10, the operator writes in or updates the business code data and the selection priority level data corresponding thereto.

The operator is also able to perform actuation for change setting, deletion, addition, and the like of the selection priority level manually via a personal computer or the like, and, by doing this, he is also able to assign any desired selection priority levels to the business codes of the base station list which has been stored in the received base station history information table 26a. It should be understood that, if data or the like related to an area which can newly be utilized is recorded in a data file, the operator is thereby able to acquire information related to base stations which are more useful than before.

Due to this, by managing the security level of writing in, it becomes possible for the operator to perform writing into either or both of the memory card 24 and the non-volatile memory 25, and thus the convenience in relation to the updating of business codes and the like is enhanced from the point of view of the user.

Returning to Fig. 3, the control unit 21 comprises an extraction unit for businesses with which communication can be established 21 a and a communication business selection unit 21b. Storing or updating of business codes of various communication businesses which are stored in the storage unit 23 and of business codes which have been received, making business codes into a list, generation or updating various registration data or tables, and selection processing for performing an automatic selection mode related to the base stations 51-1, 51-2, ... 51-10 are implemented by this extraction unit for businesses with which communication can be established 21a and by this communication business selection unit 21b.

In this embodiment, the control unit 21 comprises a CPU (Central Processing Unit), a digital signal processing device (DSP: Digital Signal Processing), a ROM (Read Only Memory), and a RAM (Random Access Memory) and the like, and is set up to execute programs of various types. And the functions of the extraction unit for businesses with which communication can be established 21a and of the communication business selection unit 21b are manifested by programs which correspond to these sections being executed by the control unit 21.

Here, the extraction unit for businesses with which communication can be established 21 a is a section which analyses the information carried by the radio wave which is being received at the current position, and extracts those communication businesses with which communication can be established. Moreover the communication business selection unit 21b is a section which selects a communication business to be employed, which is the communication business to be used during communication, based upon the results of extraction by the extraction unit for businesses with which communication can be established 21a and upon the contents which are registered in the first registration region 27a through a fifth registration region 27e. This communication business selection unit 21b makes the decision as to whether or not such a communication business to be employed exists or not by performing the procedures (D1) through (D5) described below.

(D1) The communication business selection unit 21b makes a first decision as to whether or not the most recently utilized communication business is included in the extracted communication businesses, which are the communication businesses which have been extracted by the extraction unit for businesses with which communication can be established 21 a.

(D2) If an affirmative decision result has been obtained by making the first decision (D1), then the communication business selection unit 21b selects the most recently utilized communication business as the communication business to be employed; while, if the result of the first decision has been negative, then it makes a second decision as to whether or not the contracted communication business is included in the extracted communication businesses.

(D3) If an affirmative decision result has been obtained by making the second decision (D2), then the communication business selection unit 21b selects the contracted communication business as the communication business to be employed; while, if the result of the second decision has been negative, then it makes a third decision as to whether or not one or more of the user registered communication businesses is included in the extracted communication businesses.

(D4) If an affirmative decision result has been obtained by making the third decision (D3), then the communication business selection unit 21b selects a communication business to be employed from among the communication businesses which are extracted communication businesses and moreover which are user registered communication businesses; while, if the result of the third decision has been negative, then it makes a fourth decision as to whether or not one or more of the contracted business registered communication businesses is included in the extracted communication businesses.

(D5) If an affirmative decision result has been obtained by making the fourth decision (D4), then the communication business selection unit 21b selects a communication business to be employed from among the communication businesses which are extracted communication businesses and moreover which are contracted business communication registered businesses; while, if the result of the fourth decision has been negative, then it makes a fifth decision as to whether or not one or more of the optionally registered communication businesses is included in the extracted communication businesses.

If an affirmative decision result has been obtained by making the fifth decision (D5), then the communication business selection unit 21b selects a communication business to be employed from among the communication businesses which are extracted communication businesses and moreover are optionally registered communication businesses; while, if the result of the fifth decision has been negative, then it decides that, at the current position, no communication business to be employed exists.

In this manner, in the base station selection processing, the mobile terminal 10 is able to vary the processing so as to connect to the network only from the list of specified business codes which has been registered and stored in advance in the storage unit 23. Furthermore, by setting and storing a specified business automatic selection mode in advance, the mobile terminal 10 is able to select a communication business A which, for example, provides a cheap cost of connection.

Moreover, a selection priority level for each of the optionally registered communication businesses is also registered by the mobile terminal 10 in the fifth registration region 27e, and the communication business selection unit 21b selects a communication business to be employed from among the communication businesses which are extracted communication businesses and moreover are optionally registered communication businesses, in consideration of these selection priority levels. In other words the mobile terminal 10 selects, for example, a communication business A as an optionally registered communication business, in accordance with the selection priority level which is registered in the optionally registered communication business table (see Fig. 4). Moreover, this selection priority level can imply various different orders of connection. The selection priority levels also function to specify attribute information for the communication businesses, such as for example whether the cost of connection is high or low and the like. And attribute information data is stored for each of the optionally registered communication businesses which has been written into the fifth registration region 27e. In other words, this attribute information is assigned to the communication businesses. Accordingly, it becomes possible to update the list data for the optionally registered communication businesses and the attribute information data for these optionally registered communication businesses separately, so that it becomes possible to update any desired attribute information such as, for example, the cost of connection or the like. It should be understood that, in the state in which he has referred to these selection priority levels, the user is also able to select a communication business manually. In other words, in this manner, the communication business selection unit 21b selects a communication business to be employed in consideration of the selection priority level.

Next the selection processing by the mobile terminal 10 of the mobile communication system 100 which is structured as described above, for a communication business to be connected, will be explained.

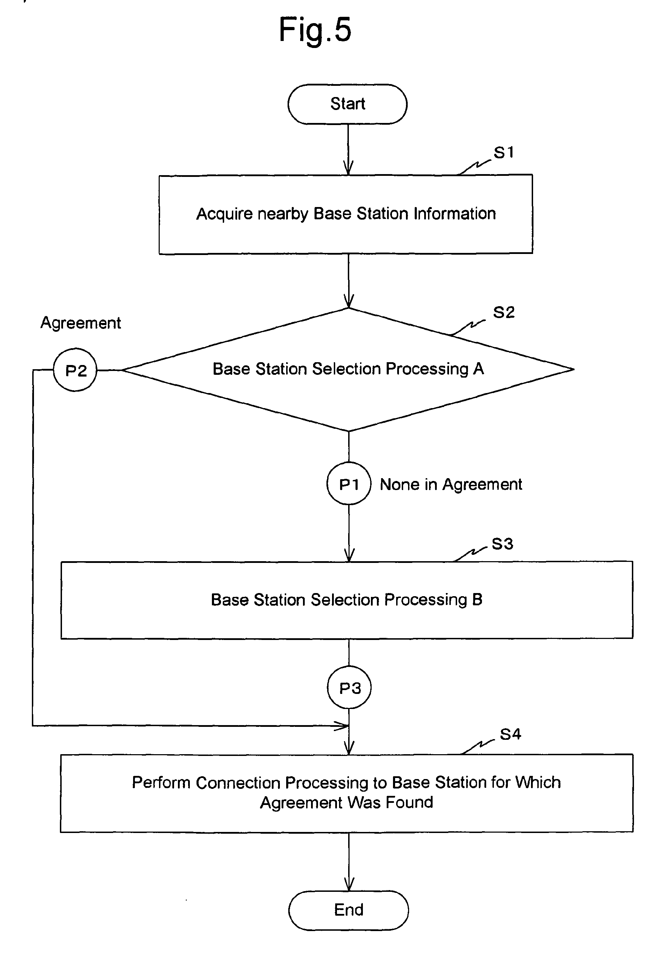

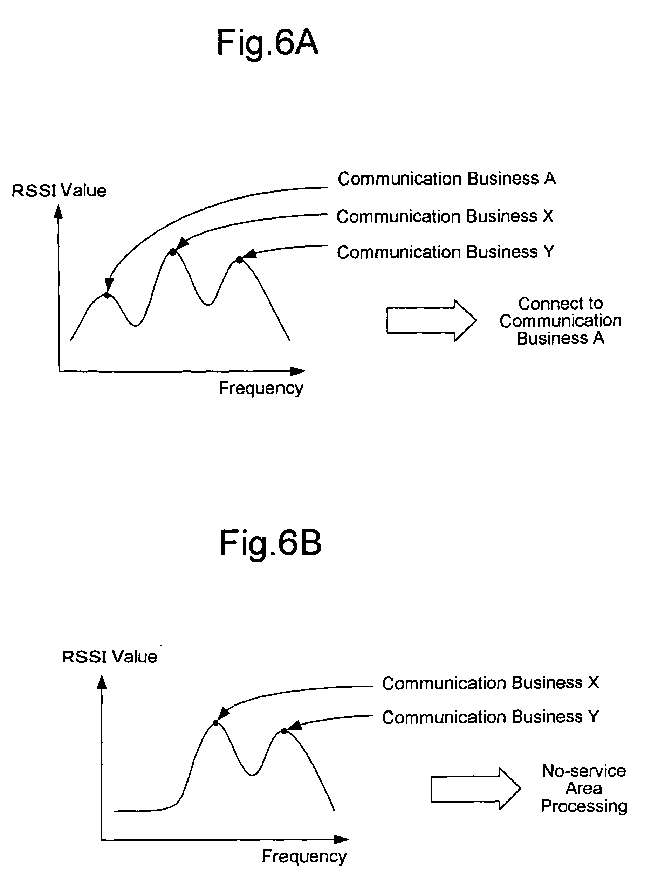

In this selection processing for such a communication business to be connected, first, in a step S1 of Fig. 5, the mobile terminal 10 searches the frequency channels f₁ ~ fₙ of the communication businesses, and measures the state of the radio wave which is received at its current position. An example of the state of the received radio wave which is thus obtained is shown in Fig. 6A and Fig. 6B. Here, the horizontal axis and the vertical axis of the graphs shown in Figs. 6A and 6B respectively show the frequency channel (Hz), and the RSSI value (no particular units) obtained by standardizing the received intensity.

In Fig. 6A, a case is shown in which the mobile terminal 10 has received three frequency channels f_{A}, f_{X}, and f_{Y} corresponding to three communication businesses A, X, and Y. Here, it is supposed that the communication business A is a communication business which has been registered in the storage unit 23, while neither of the communication businesses X and Y is a communication business which is registered in the storage unit 23. When this radio wave which corresponds to such communication businesses A, X, and Y has been received, after processing which will be described hereinafter, the mobile terminal 10 selects the communication business A as the communication business to which connection will be established.

In Fig. 6B, a case is shown in which the mobile terminal 10 has received two frequency channels f_{X} and f_{Y} corresponding to two communication businesses X and Y, neither of which is registered in the storage unit 23. When this radio wave which corresponds to such communication businesses X and Y has been received, after processing which will be described hereinafter, the mobile terminal 10 decides that no communication business to which connection can be established exists, and performs no-service area processing.

After having measured the state of the radio wave which has been received at the current position in the above manner, the mobile terminal 10 constructs the received base station history information table 26a in the temporary storage region 26. As a result, information related to the base stations which are near to the mobile terminal 10 (base station information) is acquired.

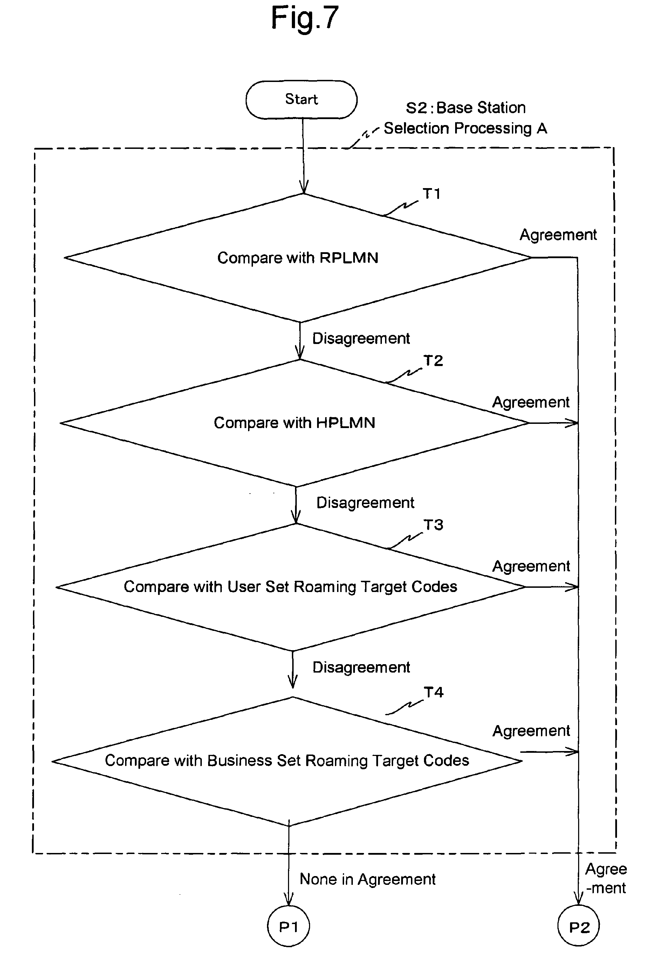

Next, in a step S2, the mobile terminal 10 performs base station selection processing A. In this step S2, as shown in Fig. 7, first, in a step T1, the mobile terminal 10 compares the business codes which have been acquired with the communication business RPLMN directly previously, and makes a decision as to whether they agree or not. If the result of this decision is affirmative, then the flow of control takes the route labeled "agreement" (hereinafter termed the "agreement route"), and passes to the step S4 of Fig. 5. And, in this step S4, the mobile terminal 10 connects to the communication business which corresponds to that business code for which agreement was found.

It should be understood that the point in Fig. 7 to which "P2" is appended corresponds to the branch of the step S2 shown in Fig. 5 to which "P2" is appended. Moreover, at the step T1 shown in Fig. 7, in the case of disagreement, the flow of control pursues the route to which "disagreement" is appended (hereinafter termed the "disagreement" route.

If the result of the decision in the step T1 is negative, then in a step T2 the mobile terminal 10 compares the business codes which have been acquired with the HPLMN, and makes a decision as to whether or not agreement occurs. If the result of this decision is affirmative, the agreement route is pursued, and the flow of control is transferred to the step S4 of Fig. 5. And in the step S4 the mobile terminal 10 connects to the communication business which corresponds to that business code.

Returning to Fig. 7, if the result of the decision in the step T2 is negative, then in a step T3 the mobile terminal 10 compares together the business codes which have been acquired and the business codes of the roaming targets which have been designated by the user, and makes a decision as to whether or not a business code in agreement is present within the business codes of the roaming targets which have been designated by the user. If the result of this decision is affirmative, then the flow of control pursues the agreement route, and is transferred to the step S4 of Fig. 5. And in this step S4 the mobile terminal 10 connects to the communication business which corresponds to that business code for which agreement was found.

Returning to Fig. 7, if the result of the decision in the step T3 is negative, then in a step T4 the mobile terminal 10 compares together the business codes which have been acquired and the business codes of the business designated roaming targets, and makes a decision as to whether or not a business code in agreement is present within the business codes of the business designated roaming targets. If the result of this decision is affirmative, then the flow of control pursues the agreement route, and is transferred to the step S4 of Fig. 5. And in this step S4 the mobile terminal 10 connects to the communication business which corresponds to that business code for which agreement was found.

Returning to Fig. 7, if the result of the decision in the step T4 is negative, then in the step T4 (F ig. 7), in the case of non-agreement, the "all in disagreement" route is pursued, and the flow of control is transferred to the step S3 of Fig. 5. And in this step S3 the mobile terminal 10 performs base station selection processing B.

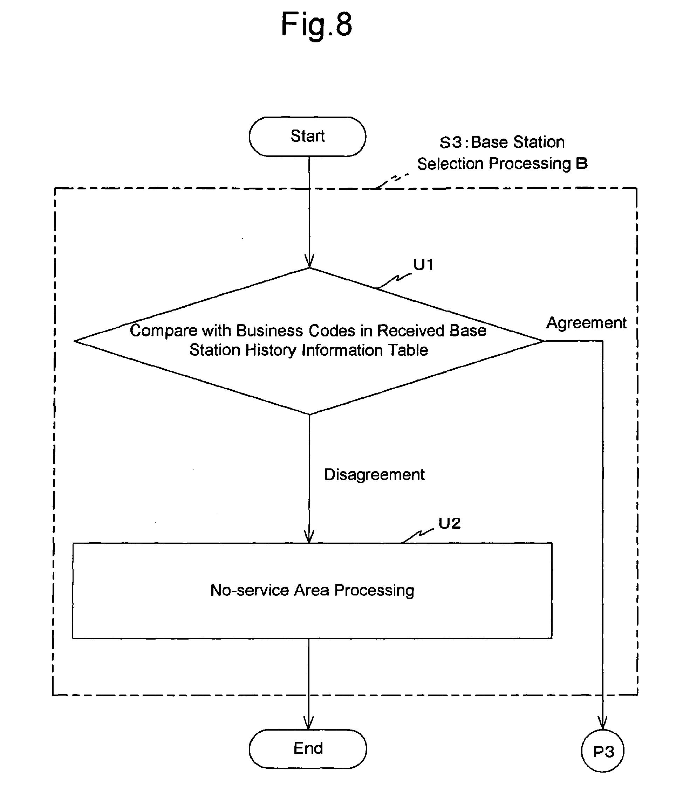

In this step S3, as shown in Fig. 8, first, in a step U1, the mobile terminal 10 compares together the business codes which have been acquired and the business codes of the optionally registered communication businesses, and makes a decision as to whether or not a business code in agreement is present within the business codes of the optionally registered communication businesses. If the result of this decision is affirmative, and moreover if there is one business code which is in agreement, then the agreement route is pursued directly, and the flow of control is transferred to the step S4 of Fig. 5. And in this step S4 the mobile terminal 10 connects to the communication business which corresponds to that business code for which agreement was found.

On the other hand, if the result of this decision in the step U 1 is affirmative, and moreover if there are a plurality of business codes which are in agreement, then that business code among this plurality of business codes is selected whose priority level is the highest. And subsequently the agreement route is pursued, and the flow of control is transferred to the step S4 of Fig. 5. And in this step S4 the mobile terminal 10 connects to the communication business which corresponds to that business code selected in the step U1.

But if the result of the decision in the step U1 is negative, then the mobile terminal 10 performs no-service area processing in the step U2.

Since, as has been explained above, in this embodiment, the mobile terminal 10 changes its processing so as to connect to the network only from the list of specified business codes which are registered in the main body of the mobile communication terminal in advance, accordingly it is possible to select any desired communication business, for example the one for which the cost of connection is the cheapest.

Moreover since a selection priority level for each of the optionally registered communication businesses is further registered in the fifth registration region 27e, accordingly the mobile terminal 10 is able to perform selection of an appropriate communication business automatically, by selecting the communication business to be employed in consideration of this selection priority level.

It should be understood that the embodiment described above can also be changed in various manners. Although the non-volatile memory 25 is used for the optionally registered business table described above (see Fig. 4), it would also be possible to arrange to use a separate storage medium which is different from the non-volatile memory 25 - for example, it would be possible to use a USIM. Moreover it is also possible to provide the optionally registered business table using an external memory, by providing various types of interfaces for memory cards to the mobile terminal 10.

Furthermore, although the fifth registration region 27e described above is provided in the non-volatile memory 25, it would also be possible, for example, for this fifth registration region 27e to be provided in the memory card 24 or the like.

Moreover although the non-volatile memory 25 stores selection priority levels for optional communication businesses, and these selection priority levels function as attribute information (attribute data) when selecting between the base stations, it would also be possible for the task of setting this attribute data to set various types of attribute data, instead of selection priority levels. For example, as attribute data, the mobile terminal 10 could select business codes in order of registration. In a similar manner, the mobile terminal 10 could also allocate the business codes separately by groups. And the mobile terminal 10 could also select a group for which the priority level is high, could search through business codes related to this group which has been selected, and could thereby determine a communication business to which communication is to be established. By doing this, when performing roaming, when the mobile terminal 10 receives any communication business among the communication businesses, it is enabled to start connection to that communication business, so that it is possible to anticipate enhancement of the convenience for the user, and increase of the clientele on the side of the communication business.

Furthermore although, in the embodiment described above, the non-volatile memory 25 stored business codes with selection priority levels appended which were not registered in the memory card 24, it would also be acceptable to arrange for it also to store those business codes with selection priority levels appended which are registered in the memory card 24 as well. By doing this, it is possible to update both the business codes of the initial communication businesses and also the business codes of the optionally registered communication businesses all together.

In addition although, in the embodiment described above, the non-volatile memory 25 stored the business codes with selection priority levels appended in advance, it would also be possible for the non-volatile memory 25 to be made so that it was possible to change the selection priority level settings of all, or a part, of the business codes with selection priority levels appended. Even if the business codes of both the initial communication businesses and also the optionally registered communication businesses are stored in the non-volatile memory 25, it would still be possible to change the selection priority level settings of all, or a part, of the business codes with selection priority levels appended.

Furthermore although, in the embodiment described above, it was arranged to store a list of the business codes to which it is desired that the mobile terminal 10 should connect, instead of this, it would also be possible to store a list of business codes to which the mobile terminal 10 should refuse to connect. To put it in another manner, instead of the mobile terminal 10 storing a white list of business codes to which it is desired that it should establish connection, it would also be possible to store a black list of business codes to which it should refuse to connect. In other words, the mobile terminal 10 could maintain a refusal register. In addition to these possibilities, it would also be possible further to extend the method of extracting various types of data such as business codes and the like from the optionally registered business table.

And although, in the embodiment described above, the method of updating the non-volatile memory 25 was to use a data file downloaded by the user using a personal computer or the like, for this method of updating, it would be possible to utilize various methods, such as directly rewriting the non-volatile memory 25, command conversion, rewriting via on-air internet, taking out and changing the memory card, and so on. Here, direct rewriting of the non-volatile memory 25 is a method whereby the user or the seller updates the non-volatile memory 25 directly using a dedicated device, similarly to the task of upgrading the software version. Moreover, command conversion is a method of storing in advance in the mobile terminal 10, as a firmware program, for example, a PCM-CIA (Personal Computer Memory - Card International Association) interface command which can perform new registration, correction, and deletion of the optionally registered business table by taking advantage of an external interface of the main body of the device. Here it is possible to update the storage information, whatever type of storage medium such as the non-volatile memory 25 of the main body or a USIM or external memory or the like may be used. Furthermore, "rewriting via on-air internet" means rewriting via the internet by using internet connection software which has installed the above described "command conversion". Moreover, taking out and changing the memory card is a method of updating the communication business list by taking out and changing the USIM and external memory provided to the mobile terminal 10

It should be understood that it would also be acceptable for the mobile terminal 10 to be a transportable communication terminal device such as a portable telephone device, a PDA (Personal Digital Assistant), a wireless LAN card or the like, and it would also be acceptable for it to be a communication terminal device which is mounted in a mobile manner, such as in a vehicle or the like.

### INDUSTRIAL APPLICABILITY

As has been explained, above the communication business selection method according to the present invention is capable of being applied to selection of a communication business to which connection is to be established during roaming. And the mobile communication terminal device according to the present invention is capable of being applied to a mobile communication terminal device which possesses a roaming function.

## Claims

1. A communication business selection method in which a communication business to be employed, which is a communication business to be used by a mobile communication terminal device during communication, is selected, comprising:
a business with which communication can be established extraction process, in which said mobile communication terminal device analyzes information carried by a radio wave which is received at the current position, and extracts communication businesses with which communication can be established;
a first selection process, in which said mobile communication terminal device decides whether or not the most recently utilized communication business, for which an identifier is registered in a first registration region of said mobile communication terminal device, is included in the extracted communication businesses, which are the communication businesses which have been extracted by said communication business extraction process, and if an affirmative decision result has been obtained, said mobile communication terminal device selects said most recently utilized communication business as said communication business to be employed;
a second selection process in which, if the result of the decision in said first selection process is negative, said mobile communication terminal device decides whether or not a contracted communication business, for which an identifier is registered in a second registration region of said mobile communication terminal device, is included in said extracted communication businesses, and if an affirmative decision result has been obtained, said mobile communication terminal device selects said contracted communication business as said communication business to be employed;
a third selection process in which, if the result of the decision in said second selection process is negative, said mobile communication terminal device decides whether or not at least a single user registered communication business, for which an identifier is registered in a third registration region in which only the user can perform registration, is included in said extracted communication businesses, and if an affirmative decision result has been obtained, said mobile communication terminal device selects said communication business to be employed from among communication businesses which are said extracted communication businesses and moreover are said user registered communication businesses;
a fourth selection process in which, if the result of the decision in said third selection process is negative, said mobile communication terminal device decides whether or not at least a single contracted business registered communication business, for which an identifier is registered in a fourth registration region in which only said contracted communication business can perform registration, is included in said extracted communication businesses, and if an affirmative decision result has been obtained, said mobile communication terminal device selects said communication business to be employed from among communication businesses which are said extracted communication businesses and moreover are said contracted business registered businesses;
a fifth selection process in which, if the result of the decision in said fourth selection process is negative, said mobile communication terminal device decides whether or not at least a single optionally registered communication business, for which an identifier is registered in a fifth registration region in which said user and said contracted communication business can perform registration, is included in said extracted communication businesses, and if an affirmative decision result has been obtained, said mobile communication terminal device selects said communication business to be employed from among communication businesses which are said extracted communication businesses and moreover are said optionally registered communication businesses; and
a communication business non-existent decision process in which, if the result of the decision in said fifth selection process is negative, it is decided that no communication business to be employed exists at said current position.

2. A communication business selection method according to Claim 1, **characterized by** further comprising an optionally registered communication business registration process of, before said business with which communication can be established extraction process, registering the identifier of said at least a single optionally registered communication business in said fifth registration region.

3. A communication business selection method according to Claim 1,
**characterized in that**:
a selection priority level for each of said optionally registered communication businesses is also registered in said fifth registration region; and
in said fifth selection process, said communication business to be employed is selected in consideration of said selection priority levels.

4. A mobile communication terminal device, **characterized by** comprising: a storage means which comprises a first registration region in which an identifier of a most recently utilized communication business is registered, a second registration region in which an identifier of a contracted communication business is registered, a third registration region in which at least an identifier of a single user registered communication business can be registered only by the user, a fourth registration region in which at least an identifier of a single contracted business registered communication business can be registered only by said contracted communication business, and a fifth registration region in which at least an identifier of a single optionally registered communication business can be registered by said user and by said contracted communication business;
a business with which communication can be established extraction means which analyzes information carried by a radio wave which is received at the current position, and extracts communication businesses with which communication can be established;
and a communication business selection means which, based upon the result of extraction by said business with which communication can be established extraction means and upon the contents registered in said first through fifth registration regions, selects a communication business to be employed, which is the communication business to be utilized during communication;
and in that said communication business selection means: performs a first decision as to whether or not said most recently utilized communication business is included in the extracted communication businesses, which are the communication businesses which have been extracted by said business with which communication can be established extraction means, and, if an affirmative decision result has been obtained, selects said most recently utilized communication business as said communication business to be employed;
if the result of said first decision has been negative, performs a second decision as to whether or not said contracted communication business is included in said extracted communication businesses, and, if an affirmative decision result has been obtained, selects said contracted communication business as said communication business to be employed;
if the result of said second decision has been negative, performs a third decision as to whether or not said at least a single user registered communication business is included in said extracted communication businesses, and if an affirmative decision result has been obtained, selects said communication business to be employed from among communication businesses which are said extracted communication businesses and moreover are said user registered communication businesses;
if the result of said third decision has been negative, performs a fourth decision as to whether or not said at least a single contracted business registered communication business is included in said extracted communication businesses, and if an affirmative decision result has been obtained, selects said communication business to be employed from among communication businesses which are said extracted communication businesses and moreover are said contracted business communication registered businesses;
if the result of said fourth decision has been negative, performs a fifth decision as to whether or not said at least a single optionally registered communication business is included in said extracted communication businesses, and if an affirmative decision result has been obtained, selects said communication business to be employed from among communication businesses which are said extracted communication businesses and moreover are said optionally registered communication businesses;
and, if the result of said fifth decision has been negative, decides that no communication business to be employed exists at said current position.

5. A mobile communication terminal device according to Claim 4, **characterized in that**:
a selection priority level for each of said optionally registered communication businesses is also registered in said fifth registration region; and
said communication business selection means selects said communication business to be employed from among communication businesses which are said extracted communication businesses and moreover are said optionally registered communication businesses, in consideration of said selection priority levels.
